# EUROPEAN PATENT SPECIFICATION

(11) **EP 3 942 152 B1**
(45) Date of publication and mention of the grant of the patent: **11.12.2024**
(21) Application number: 20774585.2
(22) Date of filing: 17.03.2020
(51) Int. Cl.: E21B 33/12, E21B 33/124, F16J 15/34

(54) **SEALS**
DICHTUNGEN
JOINTS

(30) Priority: 20.03.2019 US 201962821246 P
(43) Date of publication of application: 26.01.2022
(73) Proprietor: Saint-Gobain Performance Plastics Corporation, Solon, OH 44139 (US)
(72) Inventor: CAGLIO, Simone, 20833 Giussano (IT); ROUSSEAU, Filip, 2845 Niel (BE); DUBOIS, Herman, M., 2570 Duffel (BE); KUSTERMANS, Jan, 2960 Brecht (BE)
(74) Representative: Zimmermann & Partner Patentanwälte mbB
(86) International application number: PCT/US2020/023092
(87) International publication number: WO 2020/190913

(56) References cited:
- WO-A1-2009/099433
- FR-A1- 2 260 715
- US-A- 4 576 385
- US-A- 4 576 385
- US-A- 4 706 970
- US-A1- 2004 129 912
- US-A1- 2015 102 247
- US-A1- 2015 226 338

## Description

### TECHNICAL FIELD

The present disclosure relates to seals, and more particularly to energized seals.

### BACKGROUND ART

Seals are typically used to prevent leakage from occurring within an annulus between two or more components. For example, a seal may be used in hardware between inner and outer components, such as a shaft and a bore. The seal may be positioned between the shaft and the bore to maintain different fluidic pressures or to separate different fluidic components on opposing sides of the seal.

In many applications, for instance in oil and gas drilling and refining operations, it is necessary for seals to withstand wide temperature ranges while maintaining effective sealing characteristics. Industries utilizing seals continue to demand improved seal performance over a wide range of environmental conditions.

Related patent application FR 2260715 A1 shows an annular seal having several features in common with the presently claimed invention.

### BRIEF DESCRIPTION OF THE DRAWINGS

Embodiments are illustrated by way of example and are not intended to be limited in the accompanying figures.
FIG. 1 includes a partial cross-sectional view of a seal in accordance with an embodiment.
FIG. 2 includes a cross-sectional view of the seal in accordance with an embodiment.
FIG. 3 includes an enlarged cross-sectional view of a portion of a seal in accordance with an embodiment.
FIG. 4 includes a cross-sectional view of a seal in accordance with another embodiment.
FIG. 5 includes a chart plotting leakage performance of an exemplary seal in accordance with an embodiment herein as measured over a range of low temperature cycles.
FIG. 6 includes a chart plotting leakage performance of the exemplary seal in accordance with an embodiment herein as measured over a range of high temperature cycles.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other embodiments can be used based on the teachings as disclosed in this application.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the sealing arts.

Seals are generally used in hardware to isolate volumes and pressures from one another. In particular, seals can be used in hardware adapted for use in harsh environmental conditions, such as at low temperatures, and required to meet certain leakage performance metrics.

In one or more embodiments, a seal can include an annular body adapted to fit around an inner component and within an outer component. In particular, the seal can fit within an annulus defined between the inner and outer components. In certain instances, the seal can be adapted to have a fugitive emission measured leakage rate, as measured according to ISO 15848-1, less than 0.00001 mg*s⁻¹*m⁻¹. In a more particular embodiment, the seal can be certified as Class AH compliant, as measured according to ISO 15848-1.

In one or more embodiments, the seal can include a plurality of rings stacked together in axial alignment. The plurality of rings can include, for example, a first energized jacket, a second energized jacket, and a plurality of seal rings. The first and second energized jackets can be stacked adjacent to one another. In an embodiment, the second energized jacket can be disposed between the first energized jacket and the plurality of seal rings. A spacer can be positioned between the first and second energized jackets and extend at least partially into the second energized jacket.

In an embodiment, the first and second energized jackets can include different types of energizing elements. For example, the first energized jacket can include a coiled spring having a generally "O" shaped cross-sectional profile and the second energized jacket can include a cantilevered spring having a generally U-shaped cross-sectional profile.

In certain instances, the first and second energized jackets can operate differently. For example, the first energized jacket can operate under axial pressure generated within the annulus on a first axial end of the seal. The pressure can cause the first energized jacket to radially bias into the hardware, thus generating a primary effective sealing condition. Meanwhile, the second energized jacket can operate under mechanical loading caused by the first energized jacket (or the spacer disposed between the first and second energized jackets). That is, the first energized jacket (or the spacer disposed between the first and second energized jackets) can mechanically load the second energized jacket to generate a secondary effective sealing condition.

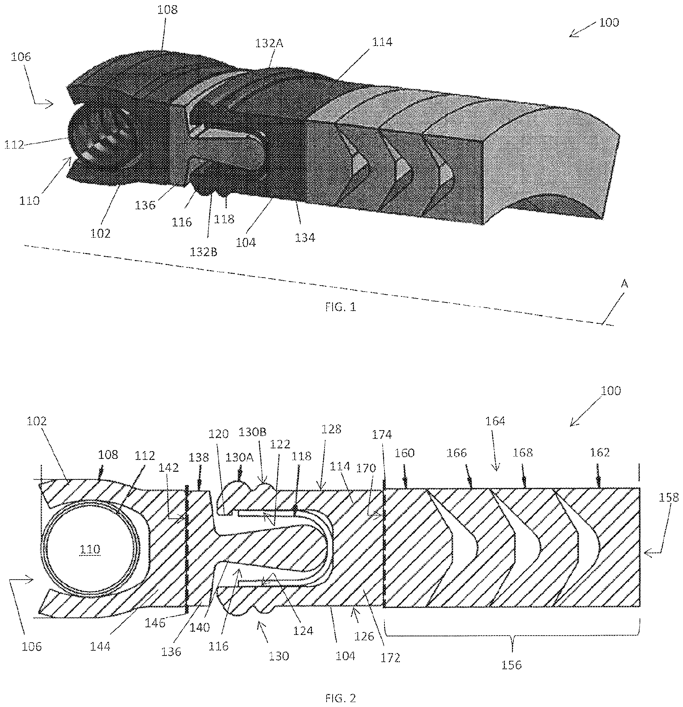

FIG. 1 and 2 include cross-sectional views of a seal 100 in accordance with an embodiment. The seal 100 includes a first energized jacket 102 and a second energized jacket 104. In an embodiment, the first energized jacket 102 can define a first axial end 106 of the seal 100. The first axial end 106 of the seal 100 can be adapted for use on a relatively high-pressure region of a hardware (not illustrated). The resulting load from the high-pressure region can bias the first energized jacket 102 toward a relatively low-pressure side of the hardware.

The first energized jacket 102 can include a body 108 defining a volume 110 at least partially containing a first energizing element 112.

In an embodiment, the body 108 can include a polymeric material. Exemplary polymers include tetrafluoroethylene (TFE) such as polytetrafluoroethylene (PTFE), polyvinylidene fluoride (PVDF), perfluoroalkoxy (PFA), polychlorotrifluoroethylene (PCTFE), polyethylenetetrafluoroethylene (ETFE), vinylidene fluoride (THV), polyethylenechlorotrifluoroethylene (ECTFE), polyether ether ketone (PEEK), or any combination thereof. The scope of the disclosure is not intended to be limited to those exemplary polymers listed above. In a particular embodiment, the body 108 includes PTFE, such as, for example, FLUOROLOY^{®} A02 (available from Saint-Gobain Performance Plastics). FLUOROLOY^{®} A02 exhibits a tensile strength, as measured according to ASTM D4894, of 36.5 MPa, an elongation, as measured according to ASTM D4894, of 500%, a compressive modulus, as measured according to ASTM D695, of 572 MPa, a deformation under load, as measured according to ASTM D621 and as tested at 2,000 PSI for 24 hours, of 4.6%, a Shore D hardness, as measured according to ASTM D2240, of between 50 and 65, and a coefficient of linear thermal expansion, as measured according to ASTM E831 between 26°C and 200°C, of 12.6 m/m/°C.

One or more fillers can be included in the body 108 of the first energized jacket 102. For instance, exemplary fillers include glass fibers, carbon fibers, silicon, PEEK, aromatic polyester, carbon particles, bronze, fluoropolymers, thermoplastic fillers, aluminum oxide, polyamidimide (PAI), PPS, polyphenylene sulfone (PPSO2), LCP, aromatic polyesters, molybdenum disulfide, tungsten disulfide, graphite, grapheme, expanded graphite, boron nitride, talc, calcium fluoride, or any combination thereof. Additionally, the filler can include alumina, silica, titanium dioxide, calcium fluoride, boron nitride, mica, Wollastonite, silicon carbide, silicon nitride, zirconia, carbon black, pigments, or any combination thereof.

In an embodiment, the first energizing element 112 can be fully contained within the volume 110 of the body 108 such that the first axial end 106 of the seal 100 is defined by one or more portions of the body 108. In a more particular embodiment, at least a portion of the first energizing element 112 can be visible from the first axial end 106 of the seal 100. In certain instances, at least 10% of the first energizing element 112 can be disposed in the volume 110, at least 25% of the first energizing element 112 can be disposed in the volume 110, at least 50% of the first energizing element 112 can be disposed in the volume 110, or at least 75% of the first energizing element 112 can be disposed in the volume. In a more particular embodiment, the entire first energizing element 112 can be disposed in the volume 110.

The first energizing element 112 can include a deformable energizer, such as a spring, adapted to bias the body 108 of the first energized jacket 102 into the hardware. In an embodiment, first energizing element 112 can include a double coiled spring, a single coiled spring, an advanced pitch spring, a cantilevered spring, or a plurality of cantilevered springs. In a particular embodiment, the first energizing element 112 can have a generally "O" shaped cross-sectional profile. In an embodiment, the first energizing element 112 can be formed from a metal, alloy, or other resilient material. Exemplary alloys may include cobalt and nickel. In certain instances, the first energizing element 112 can be heat treated to increase mechanical properties.

The second energizing jacket 104 can include a body 114 defining a volume 116 at least partially containing a second energizing element 118. In an embodiment, the body 114 can include a polymeric material. Exemplary polymers include tetrafluoroethylene (TFE) such as polytetrafluoroethylene (PTFE), polyvinylidene fluoride (PVDF), perfluoroalkoxy (PFA), polychlorotrifluoroethylene (PCTFE), polyethylenetetrafluoroethylene (ETFE), vinylidene fluoride (THV), polyethylenechlorotrifluoroethylene (ECTFE), polyether ether ketone (PEEK),or any combination thereof. The scope of the disclosure is not intended to be limited to those exemplary polymers listed above. In a particular embodiment, the body 114 includes PTFE, such as, for example, FLUOROLOY^{®} A02 (available from Saint-Gobain Performance Plastics).

One or more fillers can be included in the body 114 of the second energized jacket 104. For instance, exemplary fillers include glass fibers, carbon fibers, silicon, PEEK, aromatic polyester, carbon particles, bronze, fluoropolymers, thermoplastic fillers, aluminum oxide, polyamidimide (PAI), PPS, polyphenylene sulfone (PPSO2), LCP, aromatic polyesters, molybdenum disulfide, tungsten disulfide, graphite, grapheme, expanded graphite, boron nitride, talc, calcium fluoride, or any combination thereof. Additionally, the filler can include alumina, silica, titanium dioxide, calcium fluoride, boron nitride, mica, Wollastonite, silicon carbide, silicon nitride, zirconia, carbon black, pigments, or any combination thereof.

In an embodiment, the second energizing element 118 can be fully contained within the volume 116 of the body 114. In certain instances, at least 10% of the second energizing element 118 can be disposed in the volume 116, at least 25% of the second energizing element 118can be disposed in the volume 116, at least 50% of the second energizing element 118can be disposed in the volume 116, or at least 75% of the second energizing element 118can be disposed in the volume 116. In a more particular embodiment, the entire first energizing element 112 can be disposed entirely in the volume 110.

In a particular embodiment, the body 114 can include one or more retention features 120 adapted to prevent extrusion of the second energizing element 118 from the volume 116. The retention feature 120 can include, for instance, a notch or structure extending into the volume 116 to prevent axial translation of the second energizing element 118 from the volume 116. The exemplary embodiment illustrated in FIG. 2 includes the retention feature 120 on an outer surface 122 of the volume 116. However, in other embodiments, the retention feature 120 can be disposed on an inner surface 124 of the volume 116 or the body 114 can include a plurality of retention features (e.g., one retention feature on the inner surface 124 and one retention feature on the outer surface 122).

The second energizing element 118 can include a deformable energizing element, such as a spring, adapted to bias the body 114 of the second energized jacket 104 into the hardware. The second energizing element 118 can include a double coiled spring, a single coiled spring, an advanced pitch spring, a cantilevered spring, or a plurality of cantilevered springs. In an embodiment, the first and second energizing elements 112 and 118 can include different types of energizing elements, as compared to one another. For instance, the first energizing element 112 can include a double coiled spring and the second energizing element 118 can include a cantilever spring. The cantilever spring can have a generally "U" shaped cross-sectional profile. In another embodiment, the first and second energizing elements 112 and 118 can include the same type of energizing elements, as compared to one another. The second energizing element 118 can be formed from a metal, alloy, or other resilient material. Exemplary alloys may include cobalt and nickel.

The body 114 of the second energized jacket 104 can define a radially inner surface 126 and a radially outer surface 128. At least one of the radially inner and outer surfaces 126 and 128 can include one or more sealing features 130 adapted to create enhanced fluidic sealing characteristics. In an embodiment, the one or more sealing features 130 can include at least one sealing feature, at least two sealing features, at least three sealing features, at least four sealing features, or at least five sealing features. The sealing features 130 can include ridges, bumps, dimples, scrapers, edges, castellation, another radially projecting surface feature, or any combination thereof. In an embodiment, the sealing features 130 can extend around at least a portion of a circumference of the body 114. In a particular embodiment, at least one of the sealing features 130 can extend continuously around the entire circumference of the body. That is, the at least one sealing feature 130 can have an uninterrupted and similar shaped profile around the entire circumference of the body 114. For instance, in the illustrated embodiment (FIG. 1), the sealing features 130 extend around the entire circumference of the body 114 of the second energized jacket 104.

In the illustrated embodiment, the sealing feature 130 includes a first sealing feature 130A and a second sealing feature 130B disposed on the radially outer surface 128 of the body 114. In the uninstalled state illustrated in FIG. 2 (i.e., prior to installation of the seal 100 within hardware), the first and second sealing features 130A and 130B can have different heights as compared to one another and as measured from the radially outer surface 128 of the body. For instance, in the illustrated embodiment, the first sealing feature 130A is taller than the second sealing feature 130B. By way of example, the first sealing feature 130A can be at least 1.01 times taller than the second sealing feature 130B, at least 1.05 times taller than the second sealing feature 130B, at least 1.1 times taller than the second sealing feature 130B, or at least 1.5 times taller than the second sealing feature 130B.

During installation, the body 114 of the second energized jacket 104 may deform to fit within the annulus of the hardware. More particularly, axial extensions 132A and 132B of the body 114 may deform toward one another from a hub 134 of the body 114 in a generally cantilevered manner. Such deformation may alter the relative, effective difference in height of the first and second sealing features 130A and 130B. That is, the perceived heights (i.e., the distance from central axis A) of the first and second sealing features 130A and 130B may be more similar in the installed state as compared to the uninstalled state. In a particular embodiment, the perceived height of the first and second sealing features 130A and 130B, as measured in the installed state, may be approximately the same as measured from the central axis A. In an embodiment, sealing load applied between the first sealing feature 130A and hardware can be approximately equal to sealing load applied between the second sealing feature 130B and the hardware. In another embodiment, sealing load between the hardware and the first sealing feature 130A may be different from sealing load between the hardware and the second sealing feature 130B. For instance, sealing load generated between the first sealing feature 130A and the hardware may be greater than sealing load generated between the second sealing feature 130B and the hardware. The plurality of sealing features 130 can provide redundant sealing characteristics. A pocket formed between the sealing features 130A and 130B may trap leaked fluids and prevent egress thereof from the relatively low-pressure side of the hardware. In an embodiment, the radially inner and outer surfaces of the body 114 can define a different number of annular ridges 130 as compared to one another. For by way of non-limiting example, the radially inner surface can have one or three annular ridges 130 and the radially outer surface can have two or four annular ridges 130. It is noted that the body 114 can include a different number of annular ridges 130 arranged on the radially inner and outer surfaces.

As illustrated, the first and second energized jackets 102 and 104 can be disposed adjacent, or nearly adjacent to one another. The first energized seal 102 can form a primary sealing interface adapted to handle relatively high-pressure within the hardware. Pressure from the contained liquid can cause the body 108 of the first energized jacket 102 to bias radially into the hardware. The second energized jacket 104 can be mechanically biased by the first energizing jacket 102 or a spacer 136 disposed between the first and second energized jackets 102 and 104.

In an embodiment, the spacer 136 can be disposed between the first and second energized jackets 102 and 104. The spacer 136 can transmit axial loading from the first energized jacket 102 to the second energized jacket 104. In an embodiment, the spacer 136 can include a base 138 and a support 140. The support 140 can extend from the base 138 in a direction toward the second energized jacket 104. In a more particular embodiment, the support 140 can define a height, H_{S}, as viewed in cross section and measured parallel with a central axis A of the seal 100, generally perpendicular to a thickness, T_{B}, of the base 138.

In an embodiment, H_{S} can be no less than 0.5 T_{B}. In a more particular embodiment, H_{S} can be no less than 0.75 T_{B}, no less than 1 T_{B}, no less than 1.1 T_{B}, or no less than 1.25 T_{B}. In another embodiment, H_{S} can be no greater than 10 T_{B}, no greater than 5 T_{B}, or no greater than 2 T_{B}. In a particular embodiment, and as described in greater detail below, the support height, H_{S}, can be sized to fit within the volume 116 of the second energized jacket 104.

In an embodiment, the thickness, T_{B}, of the base 138 may lie along a plane oriented perpendicular to the central axis A of the seal 100. The base 138 thickness, T_{B}, as measured between radially inner and outer locations, can be less than a thickness of the annulus adapted to receive the seal 100. In such a manner, the spacer 136 can be adapted to be spaced apart from the hardware in the installed state.

In an embodiment, the spacer 136 may include a single, monolithic body. The spacer 136 can be formed from a resilient material, such as a resilient polymer. In an embodiment, the spacer 136 can include a material having a higher strength as compared to the material of the first and second energized jackets 102 and 104. By way of non-limiting example, the spacer 136 can include an aramid, such as an aromatic polyamide, an aromatic polyester, an aromatic polyether, or an aromatic polyurethane, as these materials exhibit a low coefficient of linear thermal expansion and a low elongation at break. Other exemplary polymers include: polyimides (such as, for example, the KAPTON brand polyimide available from E.I duPont deNemours and Co., Wilmington, Delaware), polyparaphenylene (PPP, available from Maxdem, Inc., San Dimas, California), poly (ethylene naphthalene 2,6-dicarboxylate, PEN), poly(ethylene naphthalate-co-2,6- bibenzoate, PENBB), polyethylene terephthalate (PET), polycarbonate (PC), cycloolefin copolymers (COC, such as, for example, TOPAS^{®} available from Hoechst Technical Polymers), polyphenylene sulfide (PPS), PES (polyether sulfone), polyaryletherketone (PAEK), polysulfones, polyacrylates (e.g., crosslinked polymethyl methacrylate,PMMA) and the like and mixtures thereof. In a particular embodiment, the spacer 136 can include Meldin. It will be recognized that this list is not exhaustive and that other materials can also be used in the composition of the spacer 136.

In a non-illustrated embodiment, the spacer 136 can be integral with the first energized jacket 102. That is, the spacer 136 can be integral, or monolithic, with the body 108 of the first energized jacket 102. In certain instances, the spacer 136 may be defined as the portion of the body 108 that acts primarily to space apart the first and second energized jackets 102 and 104.

Referring to FIG. 2, the spacer 136 can define a first axial end surface 142 adapted to contact the body 108 of the first energized jacket 102. In a more particular embodiment, the first axial end surface 142 of the spacer 136 can be adapted to contact a surface of a hub 144 of the first energized jacket 102. In the illustrated embodiment, the first axial end surface 142 of the spacer 136 contacts the hub 144 of the first energized jacket 102 along a planar contact interface 146. In an embodiment, the interface 146 can lie along a plane generally perpendicular with the central axis A of the seal 100. As illustrated, the interface 146 can extend across an entire thickness of the spacer 136. Use of a planar interface 146 between the first energized jacket 102 and the spacer 136 may enhance sealing characteristics of the seal 100 as compared to non-planar interfaces, such as arched interfaces, multi-planar interfaces, or both. In certain embodiments, the interface 146 can be approximately uniform in shape, size, or both, as measured around the circumference of the seal 100. In a non-illustrated embodiment, the interface 146 between the first energized jacket 102 and the spacer 136 can be non-planar.

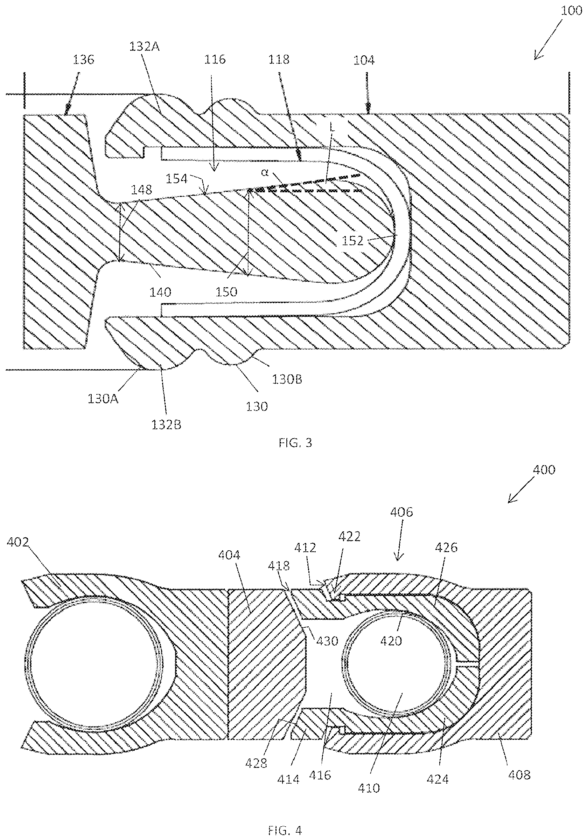

FIG. 3 includes an enlarged view of the spacer 136 and second energized jacket 104 of a seal 100 in accordance with an embodiment. As illustrated, the support 140 of the spacer 136 can define a tapered profile extending into the volume 116 of the second energized jacket 104. In an embodiment, the support 140 can contact the second energizing element 118 in the installed state. In a more particular embodiment, a tip 152 of the support 140 can contact the second energizing element 118 in the installed and uninstalled states. In a more particular embodiment, side surfaces 154 of the support 140 can be spaced apart from the second energizing element 118 at least when the seal 100 is in the uninstalled state (i.e., prior to deflection caused by installation force from the hardware).

In a particular embodiment, the support 140 can define a first thickness, T_{S1}, as measured at a first axial location 148 along the support 140, and a second thickness, T_{S2}, as measured at a second axial location 150 along the support 140, where T_{S1} is not equal to T_{S2}. For instance, T_{S1} can be less than T_{S2}. By way of example, T_{S1} can be no greater than 0.99 T_{S2}, no greater than 0.98 T_{S2}, no greater than 0.97 T_{S2}, no greater than 0.96 T_{S2}, no greater than 0.95 T_{S2}, no greater than 0.9 T_{S2}, no greater than 0.75 T_{S2}, or no greater than 0.5 T_{S2}. In another embodiment, T_{S1} can be no less than 0.01 T_{S2}, no less than 0.1 T_{S2}, or no less than 0.25 T_{S2}. In an embodiment, the first axial location 148 can be disposed closer to the first axial end 106 of the seal 100 than the second axial location 150.

In an embodiment, the support 140 can have a generally linear taper. That is, at least a portion of at least one side surface 154 of the support 140, as viewed in cross section, can lie along a straight line L. In another embodiment, the support 140 can define an arcuate cross-sectional profile, a multi-faced polygonal cross-sectional profile, or both. In certain instances, the tip 152 of the support 140 can define a radius of curvature less than a radius of curvature of the second energizing element 118. In an embodiment, the support 140 can extend from the base 138 at a curved or fileted interface to reduce cracking and interfacing issues therebetween.

In an embodiment, axial extensions 132A and 132B of the body 114 may deform toward one another as the seal 100 is installed within hardware. For instance, the first and second axial extensions 132A and 132B can define a first angle, as measured with respect to the central axis A of the seal 100 in the uninstalled state, and a second angle, as measured in the installed state, that are different from one another. In an embodiment, the first angle can be less than the second angle. In an embodiment, the second angle may be closer to a side angle, α, of the side surface 154 of the support 140 than the first angle. In an embodiment, the side angle, α, of the side surface 154 can be at least 1°, at least 2°, at least 3°, at least 4°, at least 5°, at least 10°, at least 15°, or at least 20°. Deflection of the axial extensions 132A and 132B exhibited during installation can be at least 1°, at least 2°, at least 3°, at least 4°, at least 5°, at least 10°, at least 15°, or at least 20°. That is, deflection can cause the axial extensions 132A and 132B to move toward the support 140. In a particular embodiment, deflection of the axial extensions 132A and 132B is no greater than the side angle, α, of the side surface 154 of the support 140. At maximum deflection, which may not be required for effective sealing characteristic, at least one of the first and second axial extensions 132A and 132B (or at least a portion of the second energizing element 118 associated therewith) may contact the support 140. In this regard, the support 140 may define a maximum deflection capability of axial extensions 132A and 132B.

In a particular embodiment, the second energizing element 118, one or both of the axial extensions 132A and 132B, or a combination thereof, may contact the side surface 154 of the support 140 when the seal 100 is fully installed within the hardware. That is, for example, inner surfaces 122 or 124 of the volume 116 may contact the side surface 154 of the support 140. The second energizing element 118 can resist the deformation of the axial extensions 132A and 132B, generating a loading force of the second energized jacket 104 with respect to the hardware.

It is noted that the second energized jacket 104 illustrated in FIG. 2 includes rounded sealing features 130 whereas the second energized jacket 104 in FIG. 3 includes non-rounded sealing features 130. The seal 100 can utilize a second energized jacket 104 including either rounded sealing features 130, non-rounded sealing features 130, or both. The uninstalled height of the sealing features 130 illustrated in FIG. 3 may be measured by a relative height from the central axis A of the seal 100 instead of the height from the radially outer surface 128 (FIG. 2). In this regard, the sealing feature 130A in FIG. 3 is taller than sealing feature 130B.

As illustrated in FIG. 2, the seal 100 can further include a plurality of seal rings 156. In an embodiment, the seal rings 156 can define a chevron style packing. The seal rings 156 can be disposed on a relatively low-pressure side of the seal 100. In an embodiment, the plurality of seal rings 156 can define a second axial end 158 of the seal 100. The plurality of seal rings 156 can include, for example, a first axial end seal ring 160 and a second axial end seal ring 162 disposed on axial ends of the plurality of seal rings 156. Second axial end seal ring 162 can define the second axial end 158 of the seal 100. In an embodiment, an axial end of the second axial seal ring 162 can be planar. That is, for instance, the axial end of the second axial seal ring 162 can be oriented normal to the central axis A of the seal 100. In certain instances, the axial end of the second axial seal ring 162 can be adapted to engage with a stop feature in the annulus of the hardware. The stop feature can prevent extrusion of the seal 100 from the hardware through the low pressure side. In an embodiment, the stop feature can be a projection extending into the annulus of the hardware. In another embodiment, the stop feature can include an end surface of the annulus.

One or more intermediary seal rings 164 can be disposed between the first and second axial end seal rings 160 and 162. In certain instances, the one or more intermediary seal rings 164 can include at least one seal ring, at least two seal rings, at least three seal rings, at least four seal rings, or at least five seal rings. In an embodiment, the intermediary seal rings 164 can include first seal ring(s) 166 and second seal ring(s) 168. In a particular embodiment, the first and second seal rings 166 and 168 can be alternated. The first and second seal rings 166 and 168 can have same or different properties (e.g., size, material composition, shape) as compared to one another. For instance, in an embodiment, the first seal rings 166 can include a first material and the second seal rings 168 can include a second material different from the first material. By way of non-limiting example, the first seal rings 166 can have a lower coefficient of friction and be adapted to flow more readily upon application of loading forces while the second seal rings 168 can be more ridged and adapted to contain the flowing first seal rings 166 during loading.

In an embodiment, the first and second axial end seal rings 160 and 162 can include a first material composition and the intermediary seal rings 164 can include a second material composition different than the first material composition. By way of example, the first material composition can include a more resilient material and the second material composition can have a lower coefficient of friction.

In an embodiment, the first axial end seal ring 160 can define a first axial end surface 170 adapted to contact the body 114 of the second energized jacket 104. In a more particular embodiment, the first axial end surface 170 of the first axial end seal ring 160 can be adapted to contact a surface of a hub 172 of the second energized jacket 104. In the illustrated embodiment, the first axial end surface 170 of the first axial end seal ring 160 contacts the hub 172 of the second energized jacket 104 along a planar contact interface 174. In an embodiment, the interface 174 can lie along a plane generally perpendicular with a central axis A of the seal 100. As illustrated, the interface 174 can extend across an entire thickness of the first axial end seal ring 160, hub 172, or both. Use of a planar interface 174 between the second energized jacket 104 and the first axial end seal ring 160 may enhance sealing characteristics of the seal 100 as compared to non-planar interfaces, such as arched interfaces, multi-planar interfaces, or both. In certain embodiments, the interface 174 can be approximately uniform in shape, size, or both, as measured around the circumference of the seal 100. In a non-illustrated embodiment, the interface 174 can be non-planar.

In a non-illustrated embodiment, the first axial end seal ring 160 can be integral with the second energized jacket 104. That is, the first axial end seal ring 160 can be integral, or monolithic, with the body 114 of the second energized jacket 104. In certain instances, the first axial end seal ring 160 may be defined as the portion of the body 114 that acts primarily to interface the second jacket 104 with the plurality of seal rings 156.

In certain instances, elements of the seal 100 may freely float with respect to one another. That is, at least two of the first energized jacket 102, the second energized jacket 104, the spacer 136, and the plurality of seal rings 156 may be adapted to axially translate with respect to one another. In an embodiment, at least two of the first energized jacket 102, the second energized jacket 104, the spacer 136, and the plurality of seal rings 156 may be installed independently (i.e., at different times - e.g., in succession) with respect to one another. The elements of the seal 100 can be stacked prior to insertion into the hardware to ensure proper orientation during installation.

FIG. 4 includes a cross-sectional view of a seal 400 in accordance with another embodiment, not showing the plurality of seal rings which are also part of this embodiment.

The first energized jacket 402 can be similar to the first energized jacket 102 previously described. A spacer 404 can be disposed between the first energized jacket 402 and a second energized jacket 406.

The second energized jacket 406 can include a first sealing element 408 defining a concavity 410 recessed from an axial surface 412 thereof and a second sealing element 414 disposed at least partially within the concavity 410. The second sealing element 414 can define a concavity 416 recessed from an axial surface 418 thereof. An energizing element 420 can be disposed at least partially within the concavity 416 of the second sealing element 414.

In an embodiment, at least 10% of the second sealing element 414 can be disposed within a volume defined by the concavity 410, at least 25% of the second sealing element 414 can be disposed within a volume defined by the concavity 410, at least 50% of the second sealing element 414 can be disposed within a volume defined by the concavity 410, or at least 75% of the second sealing element 414 can be disposed within a volume defined by the concavity 410.

In an embodiment, the second sealing element 414 can contact the first sealing element 408 along a surface of the first sealing element 408 defining the concavity 410. In a more particular embodiment, the first and second sealing elements 408 and 414 can be close-fit with respect to one another. That is, for example, the contours of the mating surfaces of the first and second sealing elements 408 and 414 can be adapted to have similar shapes for close arrangement between the two parts.

In an embodiment, the concavity 416 of the second sealing element 414 can have a profile adapted to retain the energizing element 420 therein. For instance, the thickness of the concavity 416 can be less than the thickness of the energizing element 420 at, or near, the opening of the concavity 416.

In an embodiment, the first and second sealing elements 408 and 414 can include complementary retention features 422 adapted to secure the first and second sealing elements 408 and 414 together. By way of non-limiting example, the complementary retention feature 422 can include a notch and groove adapted to snap fit together.

In an embodiment, the second sealing element 414 can include a multiple-piece construction. For instance, the second sealing element 414 can include a radially inner portion 424 and a radially outer portion 426 spaced apart from one another by the concavity 416. The complementary retention feature 422 can prevent relative axial translation between the radially inner and outer portions 424 and 426.

In an embodiment, the second sealing element 414 can define an axial end 428 having a profile adapted to mate with a surface 430 of the spacer 404. Loading applied on the second sealing element 414 by the spacer 404 can bias the second sealing element 414 radially outward toward the hardware. In such a manner, the second sealing element 414 can either contact the hardware, bias the first sealing element 408 into the hardware, or both to form an effective sealing condition.

In an embodiment, the spacer 404 is axially spaced apart from the concavity 410 of the first sealing element 408. In another embodiment, the spacer 404 is spaced apart from at least a majority of the concavity 416 of the second sealing element 414. Use of a spacer 404 without support (e.g., support 140 previously described) may be suitable for applications where the energizing element 420 is a spring having a non-cantilevered profile. Use of a spacer support for non-cantilevered springs may result in damage to the non-cantilevered spring during high loading conditions.

### Examples.

A seal is installed in an assembly between a bore having a 46 mm diameter and a shaft having a 34.91 mm diameter. The seal has a central opening with a diameter of 33.78 mm and an outer diameter of 47.02 mm. The seal comprises the design illustrated in FIGS. 1 to 3. Specifically, the seal includes a first energized jacket 102, a second energized jacket 104, a plurality of seal rings 156 including two intermediary seal rings 164, and a spacer 136 between the first and second energized jackets 102 and 104.

To test fugitive emissions leakage, the assembly is cycled between room temperature (approximately 22°C) and a cold temperature (-44°C) at the rate illustrated in Chart 1 below. Helium is used as the test fluid with measurements made using a vacuum method defined in Annex A of ISO 15848-1. Leakage is measured per mm of stem diameter.

**Chart 1 - assembly leakage rate measured according to ISO 15848-1**

| Temp erature (°C) | Cycling | C ycle Count | Leak age (mbar*1/s) |
|---|---|---|---|
| 20.2 | before 50 cycles | 0 | 6.1 x 10⁻⁷ |
| 20.4 | after 50 cycles | 50 | 1.7 x 10⁻⁹ |
| -44 | before 50 cycles | 50 | 2.7 x 10⁻¹⁰ |
| -44 | after 50 cycles | 10 0 | 2.5 x 10⁻¹⁰ |
| 22.3 | before 50 cycles | 10 0 | 1.3 x 10⁻⁹ |
| 22.9 | after 50 cycles | 15 0 | 2.2 x 10⁻⁹ |
| -44 | before 50 cycles | 15 0 | 2.2 x 10⁻⁹ |
| -44 | after 50 cycles | 20 0 | 2.6 x 10⁻⁹ |
| 22.3 | before 5 cycles | 20 0 | 6.1 x 10⁻⁶ |
| 22.6 | after 5 cycles | 20 5 | 5.9 x 10⁻⁶ |

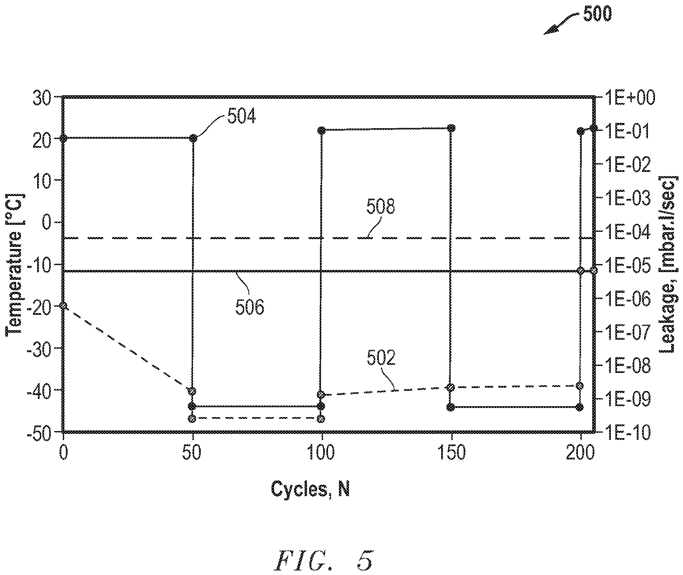

FIG. 5 includes a graph 500 depicting assembly leakage 502 as a function of temperature cycle. The temperature profile 504 is adjusted according to Chart 1 above. Class AH sealing performance is indicated by line 506. Class BH sealing performance is indicated by line 508. As illustrated, the assembly leakage 502 performed within both Class AH and Class BH criteria. More specifically, the sample seal exhibited a fugitive emission measured leakage rate (mass flow) less than 1 × 10⁻⁵ mg*s⁻¹*m⁻¹ per stem perimeter, as measured according to ISO 15848-1. The sample seal may exhibit the above leakage rate or better over endurance classes of CO1 (205 cycles), CO2 (1500 cycles), and CO3 (2500 cycles).

To test fugitive emissions leakage, the assembly is cycled between room temperature (approximately 22°C) and an elevated temperature (160°C) at the rate illustrated in Chart 2 below. Helium is used as the test fluid. Leakage is measured per mm of stem diameter.

**Chart 2 - assembly leakage rate measured according to ISO 15848-1**

| Temp erature (°C) | Cycling | C ycle Count | Leak age (mbar*1/s) |
|---|---|---|---|
| 22 | before 50 cycles | 0 | 4.4 x 10⁻¹⁰ |
| 22 | after 50 cycles | 50 | 3.7 x 10⁻¹⁰ |
| 160 | before 50 cycles | 50 | 1.9 x 10⁻⁷ |
| 160 | after 50 cycles | 10 0 | 8.4 x 10⁻⁷ |
| 22 | before 50 cycles | 10 0 | 2.6 x 10⁻⁷ |
| 22 | after 50 cycles | 15 0 | 1.7 x 10⁻⁷ |
| 160 | before 50 cycles | 15 0 | 6.4 x 10⁻⁷ |
| 160 | after 50 cycles | 20 0 | 1.2 x 10⁻⁶ |
| 22 | before 5 cycles | 20 0 | 5.2 x 10⁻⁸ |
| 22 | after 5 cycles | 20 5 | 1.0 x 10⁻⁸ |

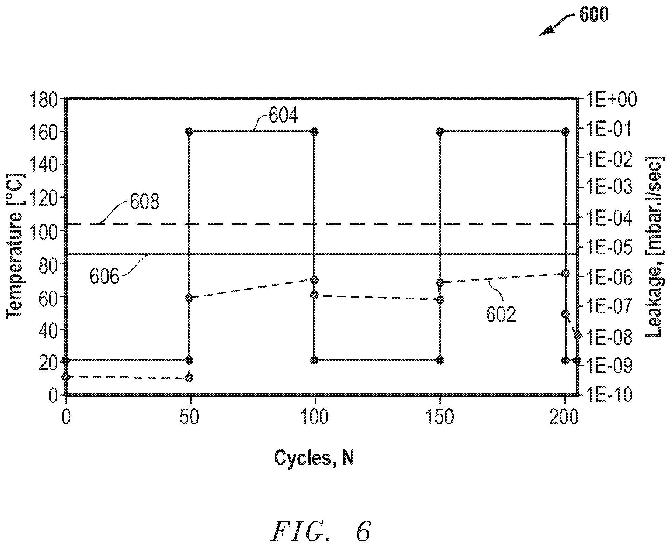

FIG. 6 includes a graph 600 depicting assembly leakage 602 as a function of temperature cycle. The temperature profile 604 is adjusted according to Chart 1 above. Class AH sealing performance is indicated by line 606. Class BH sealing performance is indicated by line 608. As illustrated, the assembly leakage 602 performed within both Class AH and Class BH criteria. More specifically, the sample seal exhibited a fugitive emission measured leakage rate (mass flow) less than 1 × 10⁻⁵ mg*s⁻¹*m⁻¹ per stem perimeter, as measured according to ISO 15848-1. The sample seal may exhibit the above leakage rate or better over endurance classes of CO1, CO2, and CO3.

In an embodiment, the annular seal is adapted to have a fugitive emission measured leakage rate (volumetric flow) less than 1.78 x 10⁻⁷ mbar*1*s⁻¹*mm of stem, as measured according to ISO 15848-1. The measured leakage rate (volumetric flow) can be determined per mm of stem diameter through the stem seal system. In an embodiment, the annular seal is adapted to exhibit the above leakage rate or better over endurance classes of CO1 (205 cycles), CO2 (1500 cycles), and CO3 (2500 cycles). Such performance is typically only achievable using bellow-type seals.

In an embodiment, a seal in accordance with one or more embodiments described herein can be used in a valve, such as a control valve or an on-off valve. More specifically, the seal can be disposed between a shaft and bonnet of the valve, sealing an annulus therebetween. In certain instances, seals in accordance with one or more embodiments described herein can be used in oil and gas, such as on drilling rigs or in refining operations. Seals in accordance with embodiments described herein can operate with low fugitive emissions, meeting Class AH requirements as defined under ISO 15848-1.

## Claims

1. An annular seal (100; 400) comprising:
a first energized jacket (102; 402) defining a first axial end (106) of the annular seal (110; 400);
a plurality of seal rings (156) defining a second axial end (158) of the annular seal (100; 400);
a second energized jacket (104; 406) comprising a hub (172) and disposed between the first energized jacket (102; 402) and the plurality of seal rings (156); and
a spacer (136; 404) disposed between the first (102; 402) and second (104; 406) energized jackets, wherein the first energized jacket (102; 402) comprises a first body (108) defining a volume (110) at least partially containing a first energizing element (112) having a generally "O" shaped cross-sectional profile, and wherein a seal ring of the plurality of seal rings (156) contacts the hub (172) of the second energized jacket (104; 406) along a planar interface (174) disposed generally perpendicular to a central axis A of the annular seal (100; 400).

2. The annular seal (100; 400) of claim 1, wherein the annular seal (100; 400) is adapted to be installed within a hardware between a relatively high pressure region and a relatively low pressure region such that the first axial end (106) of the annular seal (100; 400) is proximate the relatively high pressure region.

3. The annular seal (100; 400) of claim 1, wherein the first and second energized jackets (102, 104; 402) comprise different types of energizing elements as compared to one another, or wherein the first and second energized jackets (102, 104; 402) comprise same types of energizing elements as compared to one another.

4. The annular seal (100; 400) of claim 1, wherein the first energizing element (102; 402) comprises a double coiled spring, a single coiled spring, or an advanced pitch spring.

5. The annular seal (100; 400) of claim 1, wherein the second energized jacket (104; 406) comprises a second body defining a volume (116) containing a second energizing element (118).

6. The annular seal (100; 400) of claim 5, wherein the second energizing element (104, 406) comprises a double coiled spring, a single coiled spring, an advanced pitch spring, a cantilevered spring, or a plurality of cantilevered springs.

7. The annular seal (100; 400) of claim 5, wherein the first and second bodies have different cross-sectional shapes as compared to one another, or wherein the first and second bodies have same cross-sectional shapes as compared to one another.

8. The annular seal (100; 400) of claim 5, wherein at least one of a radially inner surface (126) and a radially outer surface (128) of the second body define an annular ridge (130).

9. The annular seal (100; 400) of claim 8, wherein the annular ridge (130) comprises at least two annular ridges extending along the radially inner or outer surfaces (126, 128) of the second body.

10. The annular seal (100; 400) of claim 1, wherein the spacer (136; 404) comprises a base (138).

11. The annular seal (100; 400) of claim 10, wherein the spacer (136; 404) further comprises a support (140), as viewed in cross section, and wherein at least a portion of the support (140) extends into a volume of the second energized jacket (104; 406).

12. The annular seal (100; 400) of claim 1, wherein the first energized jacket (102; 402) and spacer (136; 404) contact one another along a planar interface (146) disposed perpendicular with a central axis A of the annular seal (100; 400).

13. The annular seal (100; 400) of claim 1, wherein the plurality of seal rings (156) comprises first and second axial end seal rings (160, 162) disposed on axial ends of the plurality of seal rings (156) and one or more intermediary seal rings (164) disposed therebetween.

14. The annular seal ( 400) of claim 1, wherein the second energized jacket (406) comprises:
a first sealing element (408) defining a concavity (410) recessed from an axial surface (412) thereof;
a second sealing element (414) disposed at least partially within the concavity (410) of the first sealing element (408), wherein the second sealing element (414) defines a concavity (416) recessed from an axial surface (412) thereof; and
an energizing element (420) disposed at least partially within the concavity (416) of the second sealing element (414).

## Patentansprüche

1. Ringförmige Dichtung (100; 400) umfassend:
einen ersten unter Spannung stehenden Mantel (102; 402), der ein erstes axiales Ende (106) der ringförmigen Dichtung (110; 400) definiert;
eine Vielzahl von Dichtungsringen (156), die ein zweites axiales Ende (158) der ringförmigen Dichtung (100; 400) definieren;
einen zweiten unter Spannung stehenden Mantel (104; 406), umfassend eine Nabe (172) und der zwischen dem ersten unter Spannung stehenden Mantel (102; 402) und der Vielzahl von Dichtungsringen (156) angeordnet ist; und
und einen Abstandshalter (136; 404), der zwischen dem ersten (102; 402) und zweiten (104; 406) unter Spannung stehenden Mantel angeordnet ist, wobei der erste unter Spannung stehende Mantel (102; 402) einen ersten Körper (108) umfasst, der ein Volumen (110) definiert, das mindestens teilweise ein erstes Erregerelement (112), das ein im Allgemeinen "O"-förmiges Querschnittsprofil aufweist, enthält, und wobei ein Dichtungsring der Vielzahl von Dichtungsringen (156) die Nabe (172) des zweiten unter Spannung stehenden Mantels (104; 406) entlang einer ebenen Schnittstelle (174) berührt, die im Allgemeinen senkrecht zu einer Mittelachse A der ringförmigen Dichtung (100; 400) angeordnet ist.

2. Ringförmige Dichtung (100; 400) nach Anspruch 1, wobei die ringförmige Dichtung (100; 400) geeignet ist, um innerhalb einer Hardware zwischen einer Region mit relativ hohem Druck und einer Region mit relativ niedrigem Druck installiert zu werden, derart, dass das erste axiale Ende (106) der ringförmigen Dichtung (100; 400) in der Nähe der Region mit relativ hohem Druck ist.

3. Ringförmige Dichtung (100; 400) nach Anspruch 1, wobei der erste und der zweite unter Spannung stehende Mantel (102, 104; 402) im Vergleich zueinander unterschiedliche Arten von Erregerelementen umfassen oder wobei der erste und der zweite unter Spannung stehende Mantel (102, 104; 402) im Vergleich zueinander dieselben Arten von Erregerelementen umfassen.

4. Ringförmige Dichtung (100; 400) nach Anspruch 1, wobei das erste Erregerelement (102; 402) eine doppelt gewickelte Feder, eine einfach gewickelte Feder oder eine Feder mit erhöhter Steigung umfasst.

5. Ringförmige Dichtung (100; 400) nach Anspruch 1, wobei der zweite unter Spannung stehenden Mantel (104; 406) einen zweiten Körper umfasst, der ein Volumen (116) definiert, das ein zweites Erregerelement (118) enthält.

6. Ringförmige Dichtung (100; 400) nach Anspruch 5, wobei das zweite Erregerelement (104, 406) eine doppelt gewickelte Feder, eine einfach gewickelte Feder, eine Feder mit erhöhter Steigung, eine freitragende Feder oder eine Vielzahl freitragender Federn umfasst.

7. Ringförmige Dichtung (100; 400) nach Anspruch 5, wobei der erste und der zweite Körper im Vergleich zueinander unterschiedliche Querschnittsformen aufweisen oder wobei der erste und der zweite Körper im Vergleich zueinander die gleiche Querschnittsform aufweisen.

8. Ringförmige Dichtung (100; 400) nach Anspruch 5, wobei mindestens eine einer radial inneren Oberfläche (126) und einer radial äußeren Oberfläche (128) des zweiten Körpers eine ringförmige Kante (130) definiert.

9. Ringförmige Dichtung (100; 400) nach Anspruch 8, wobei die ringförmige Kante (130) mindestens zwei ringförmige Kanten umfasst, die sich entlang der radial inneren oder äußeren Oberfläche (126, 128) des zweiten Körpers erstrecken.

10. Ringförmige Dichtung (100; 400) nach Anspruch 1, wobei der Abstandshalter (136; 404) eine Basis (138) umfasst.

11. Ringförmige Dichtung (100; 400) nach Anspruch 10, wobei der Abstandshalter (136; 404) im Querschnitt betrachtet ferner eine Stütze (140) umfasst, und wobei sich mindestens ein Abschnitt der Stütze (140) in ein Volumen des zweiten unter Spannung stehenden Mantels (104; 406) erstreckt.

12. Ringförmige Dichtung (100; 400) nach Anspruch 1, wobei der erste unter Spannung stehende Mantel (102; 402) und der Abstandshalter (136; 404) einander entlang einer ebenen Schnittstelle (146) berühren, die senkrecht zu einer Mittelachse A der ringförmigen Dichtung (100; 400) angeordnet ist.

13. Ringförmige Dichtung (100; 400) nach Anspruch 1, wobei die Vielzahl von Dichtungsringen (156) einen ersten und einen zweiten axialen Enddichtungsring (160, 162), die an axialen Enden der Vielzahl von Dichtungsringen (156) angeordnet sind, und einen oder mehrere dazwischen angeordnete Zwischendichtungsringe (164) umfasst.

14. Ringförmige Dichtung (400) nach Anspruch 1, wobei der zweite unter Spannung stehende Mantel (406) umfasst:
ein erstes Dichtungselement (408), das eine Konkavität (410), die von einer axialen Oberfläche (412) davon vertieft ist, definiert;
ein zweites Dichtungselement (414), das mindestens teilweise innerhalb der Konkavität (410) des ersten Dichtungselements (408) angeordnet ist, wobei das zweite Dichtungselement (414) eine Konkavität (416) definiert, die von einer axialen Oberfläche (412) davon vertieft ist; und
ein Erregerelement (420), das mindestens teilweise innerhalb der Konkavität (416) des zweiten Dichtungselements (414) angeordnet ist.

## Revendications

1. Joint annulaire (100 ; 400) comprenant :
une première chemise excitée (102 ; 402) définissant une première extrémité axiale (106) du joint annulaire (110 ; 400) ;
une pluralité de bagues d'étanchéité (156) définissant une seconde extrémité axiale (158) du joint annulaire (100 ; 400) ;
une seconde chemise excitée (104 ; 406) comprenant un moyeu (172) et disposée entre la première chemise excitée (102 ; 402) et la pluralité de bagues d'étanchéité (156) ; et
une entretoise (136 ; 404) disposées entre la première (102 ; 402) et la seconde (104 ; 406) chemises excitées, dans lequel la première chemise excitée (102 ; 402) comprend un premier corps (108) définissant un volume (110) contenant au moins partiellement un premier élément excité (112) ayant un profil transversal généralement en forme de « O », et dans lequel une bague d'étanchéité de la pluralité de bagues d'étanchéité (156) entre en contact avec le moyeu (172) de la seconde chemise excitée (104 ; 406) le long d'une interface plane (174) disposée généralement perpendiculairement à un axe central A du joint annulaire (100 ; 400).

2. Joint annulaire (100 ; 400) selon la revendication 1, dans lequel le joint annulaire (100 ; 400) est adapté pour être installé à l'intérieur d'un matériel entre une région de pression relativement élevée et une région de pression relativement basse de sorte que la première extrémité axiale (106) du joint annulaire (100 ; 400) est proche de la région de pression relativement élevée.

3. Joint annulaire (100 ; 400) selon la revendication 1, dans lequel les première et seconde chemises excitées (102, 104 ; 402) comprennent différents types d'éléments excités comparés les uns aux autres, ou dans lequel les première et seconde chemises excitées (102, 104 ; 402) comprennent les mêmes types d'éléments excités comparés les uns aux autres.

4. Joint annulaire (100 ; 400) selon la revendication 1, dans lequel le premier élément excité (102 ; 402) comprend un ressort à double enroulement, un ressort à simple enroulement ou un ressort à pas d'avancement.

5. Joint annulaire (100 ; 400) selon la revendication 1, dans lequel la seconde chemise excitée (104 ; 406) comprend un second corps définissant un volume (116) contenant un second élément excité (118).

6. Joint annulaire (100 ; 400) selon la revendication 5, dans lequel le second élément excité (104, 406) comprend un ressort à double bobine, un ressort à simple bobine, un ressort à pas d'avancement, un ressort en porte-à-faux ou une pluralité de ressorts en porte-à-faux.

7. Joint annulaire (100 ; 400) selon la revendication 5, dans lequel les premier et second corps ont des formes de section transversale différentes comparés les uns aux autres, ou dans lequel les premier et second corps ont les mêmes formes de section transversale comparés les uns aux autres.

8. Joint annulaire (100 ; 400) selon la revendication 5, dans lequel au moins une surface radialement interne (126) et une surface radialement externe (128) du second corps définissent une crête annulaire (130).

9. Joint annulaire (100 ; 400) selon la revendication 8, dans lequel la crête annulaire (130) comprend au moins deux crêtes annulaires s'étendant le long des surfaces radialement intérieures ou extérieures (126, 128) du second corps.

10. Joint annulaire (100 ; 400) selon la revendication 1, dans lequel l'entretoise (136 ; 404) comprend une base (138) ;

11. Joint annulaire (100 ; 400) selon la revendication 10, dans lequel l'entretoise (136 ; 404) comprend en outre un support (140), tel que vu en coupe transversale, et dans lequel au moins une partie du support (140) s'étend dans un volume de la seconde chemise excitée (104 ; 406).

12. Joint annulaire (100 ; 400) selon la revendication 1, dans lequel la première chemise excitée (102 ; 402) et l'entretoise (136 ; 404) entrent en contact les unes avec les autres le long d'une interface plane (146) disposée perpendiculairement à un axe central A du joint annulaire (100 ; 400).

13. Joint annulaire (100 ; 400) selon la revendication 1, dans lequel la pluralité de bagues d'étanchéité (156) comprend des première et seconde bagues d'étanchéité d'extrémité axiale (160, 162) disposées sur les extrémités axiales de la pluralité de bagues d'étanchéité (156) et une ou plusieurs bagues d'étanchéité intermédiaires (164) disposées entre elles.

14. Joint annulaire (400) selon la revendication 1, dans lequel la seconde chemise excitée (406) comprend :
un premier élément d'étanchéité (408) définissant une concavité (410) en retrait par rapport à une surface axiale (412) de celui-ci ;
un seconde élément d'étanchéité (414) disposé au moins partiellement à l'intérieur de la concavité (410) du premier élément d'étanchéité (408), le second élément d'étanchéité (414) définissant une concavité (416) en retrait d'une surface axiale (412) de celui-ci ; et
un élément excité (420) disposé au moins partiellement à l'intérieur de la concavité (416) du second élément d'étanchéité (414).
